# FASCICULE DE BREVET EUROPEEN

(11) **EP 0 743 772 B1**
(45) Date de publication et mention de la délivrance du brevet: **03.08.2005**
(21) Numéro de dépôt: 96401052.4
(22) Date de dépôt: 14.05.1996
(51) Int. Cl.: H04J 14/02, H04J 3/08

(54) **Réseau en anneau de transmission d'informations multiplexées en longueur d'onde**
Ringnetzwerk mit Wellenlängenmultiplexing zur Nachrichtenübertragung
Transmission ring network with wavelength multiplexing

(30) Priorité: 17.05.1995 FR 9505834
(43) Date de publication de la demande: 20.11.1996
(73) Titulaire: FRANCE TELECOM, 75015 Paris (FR)
(72) Inventeur: Sutter, Alain, 75004 Paris (FR); Hamel, André, 22300 Lannion (FR); Blain, Laurent, 22300 Lannion (FR)
(74) Mandataire: Poulin, Gérard

(56) Documents cités:
- FR-A- 2 707 066
- PROCEEDINGS OF THE INTERNATIONAL CONFERENCE ON COMMUNICATIONS (ICC), GENEVA, MAY 23 - 26, 1993, vol. 1 - 2 - 03, 23 Mai 1993, INSTITUTE OF ELECTRICAL AND ELECTRONICS ENGINEERS, pages 1245-1251, XP000371271 ELREFAIE A F: "MULTIWAVELENGTH SURVIVABLE RING NETWORK ARCHITECTURES"
- WORLD TELECOMMUNICATION CONGRESS ISS 95, vol. 2, 23 - 28 Avril 1995, BERLIN, DE, pages 392-396, XP000495689 F. TILLEROT ET AL.: "INTRODUCTION OF THE WDM TECHNIQUE IN SDH NETWORKS"
- ICC 92, CHICAGO, JUNE 14 - 18, 1992, vol. 4, 14 Juin 1992, INSTITUTE OF ELECTRICAL AND ELECTRONICS ENGINEERS, pages 1173-1179, XP000337910 WAGNER S S ET AL: "MULTIWAVELENGTH RING NETWORKS FOR SWITCH CONSOLIDATION AND INTERCONNECTION"
- GLOBECOM 91, PHOENIX, DEC. 2 - 5, 1991, vol. 1 OF 3, 2 Décembre 1991, INSTITUTE OF ELECTRICAL AND ELECTRONICS ENGINEERS, pages 602-606, XP000326036 TAKASHI NAKASHIMA ET AL: "PHOTONIC ACCESS NETWORK ARCHITECTURE"

## Description

### DOMAINE TECHNIQUE

La présente invention concerne un réseau en anneau, destiné à la transmission d'informations multiplexées en longueur d'onde.

Elle s'applique notamment au domaine des télécommunications optiques et tout particulièrement aux télécommunications utilisant la norme de transmission Hiérarchie Numérique Synchrone (" *Synchronous Digital Hierarchy* ") encore appelée norme de transmission HNS (" SDH " dans les articles en langue anglaise).

### ÉTAT DE LA TECHNIQUE ANTÉRIEURE

La norme de transmission HNS permet la visibilité des affluents dans la trame, ce qui a entraîné le développement d'équipements appelés Multiplexeurs à Insertion-Extraction (" *add-drop multiplexers* ") électroniques et connus sous le sigle MIE (" ADM " dans les articles en langue anglaise).

Ces MIE possèdent deux interfaces-agrégats qui sont respectivement appelées interface Est et interface Ouest et permettent d'extraire, d'insérer ou de relayer les conduits (" paths ") comme par exemple les conduits VC-12, qui sont transportés par une trame de ligne qui circule entre les interfaces-agrégats.

Les MIE sont utilisables pour construire un réseau en anneau utilisant une technologie électronique.

Des MIE adjacents sont alors reliés deux à deux et l'ensemble des noeuds du réseau forme un anneau.

Une organisation d'un réseau de transmission d'informations en anneau présente un intérêt économique et une meilleure garantie de protection contre les pannes d'artères.

Dans un réseau en anneau, tout noeud peut être atteint depuis un autre noeud en utilisant deux chemins qui sont physiquement distincts.

Ceci est utilisé pour fournir une protection contre les pannes d'artères.

Plusieurs scénarios de protection sont en cours de normalisation.

On connait par exemple les scénarios de protection appelés " *Sub Network Connection Protection "* et " *1+1 VC Trail Protection ",* qui présentent l'avantage de la simplicité car ils ne mettent pas en jeu de protocole entre les noeuds de l'anneau.

Dans les deux cas, une information transmise entre deux noeuds est diffusée à l'émission sur deux fibres contradirectionnelles par les interfaces-agrégats Est et Ouest et une sélection s'effectue à l'arrivée sur des critères permettant de déterminer le meilleur conduit.

Le trafic est donc physiquement birouté sur les deux arcs de l'anneau, ce qui assure une protection contre toute panne simple d'artère ou de noeud traversé.

La capacité de transport sur l'anneau est limitée, pour ces types de protection, à la capacité de transport de la trame de ligne.

On connait aussi les scénarios de protection MS-DPRING et MS-SPRING qui permettent, à l'aide d'une protection au niveau de la section de multiplexage et d'un protocole, une capacité de transport sur l'anneau, supérieure à celle de la trame de ligne.

L'augmentation de la capacité de transport est une fonction de la répartition du trafic mais cette capacité de transport reste un facteur limitatif pour ce type de réseau.

En fait, dans un réseau utilisant une technologie électronique, une seule trame est partagée entre tous les noeuds ou stations et l'on est obligé de " superposer " des anneaux pour augmenter la capacité du trafic entre stations.

On connaît aussi des anneaux à routage spectral qui ne présentent pas l'inconvénient précédent.

Dans de tels anneaux, plusieurs trames circulent et sont associées à des longueurs d'onde différentes.

On utilise alors un multiplexage en longueur d'onde, ce qui permet un aiguillage des signaux optiques grâce à la possibilité de dérivation des longueurs d'onde.

Dans ces anneaux à routage spectral, chaque station comprend un composant optique appelé Multiplexeur à Insertion-Extraction Optique et connu sous le sigle MIEO (" OADM " dans les articles en langue anglaise).

Un MIEO est capable de filtrer, c'est-à-dire de dériver, une ou plusieurs longueurs d'onde qui transitent sur un anneau à routage spectral.

Les technologies optiques utilisables pour fabriquer un MIEO se classent dans deux catégories principales, à savoir :
- celles qui utilisent un filtrage fixe, un MIEO étant alors réalisé pour dériver et insérer une valeur figée de longueur d'onde, et
- celles qui utilisent un filtrage accordable où la ou les longueurs d'onde dérivées et insérées sont déterminées par une commande extérieure (tension électrique ou fréquence d'un signal électrique par exemple).

Pour le filtrage fixe, les technologies utilisables sont :
- les réseaux de diffraction (voir le document (1) qui, comme les autres documents cités par la suite, est mentionné à la fin de la présente description),
- les filtres multidiélectriques (voir le document (2)),
- les filtres à réseaux de Bragg photo-inscrits (voir le document (3)).

Pour le filtrage accordable, les technologies utilisables sont :
- les filtres de Fabry-Perot massifs
- les filtres optiques intégrés à effet acousto-optique (voir le document (4)) ou à effet électro-optique.

Les applications du multiplexage en longueur d'onde, qui sont décrites dans les documents (5) et (6) auxquels on se reportera, sont fondées sur le même principe d'organisation d'un réseau.

Dans un réseau en anneau à routage spectral, les MIE (électroniques) sont remplacés par des MIEO.

Une longueur d'onde est attribuée à chaque station du réseau et les informations destinées à une station du réseau sont regroupées dans une trame STM-N (où N prend par exemple la valeur 1 ou 4 ou 16) et sont diffusées dans les fibres optiques normale et de secours que comprend un tel réseau à routage spectral, grâce à une source-laser de longueur d'onde déterminée.

Dans la station considérée, le MIEO est dédié à cette longueur d'onde.

Si la longueur d'onde est dérivée en totalité par le MIEO, les informations de retour peuvent utiliser la même longueur d'onde.

La capacité d'un anneau à routage spectral, encore appelé anneau multicolore, est ainsi supérieure à celle d'un anneau utilisant une technologie électronique.

Dans un anneau à routage spectral, les équipements utilisés sont des systèmes de transmission point à point sur une fibre optique puisqu'on a en fait implanté plusieurs liaisons point à point sur une infrastructure physique en anneau, chaque liaison utilisant une longueur d'onde différente.

Etant donné que, au niveau de la tête de réseau, les signaux sont injectés sur les fibres normale et de secours de façon contradirectionnelle, en cas de rupture d'une fibre optique, les signaux sont récupérés sur la fibre de secours par une commutation au niveau de la réception sous forme optique ou électrique.

Il est à noter que la norme HNS ne prévoit pas une telle commutation.

Seule une protection appelée Protection de Section de Multiplexage (" *Multiplex Section* Protection "), encore appelée PSM (" MSP " dans les articles en langue anglaise), est normalisée mais elle concerne la protection d'une section de ligne et ne peut pas être appliquée dans le cas d'un anneau à routage spectral.

La gestion d'un tel anneau est différente de celle d'un anneau à technologie électronique.

Il est à noter que le routage spectral peut également être implanté sur un anneau bidirectionnel.

En fait, dans un anneau à routage spectral, chaque MIEO est associé à un équipement appelé multiplexeur terminal et il faut un grand nombre de multiplexeurs terminaux pour pouvoir relier deux stations quelconques de l'anneau.

### EXPOSÉ DE L'INVENTION

La présente invention a pour but de remédier aux inconvénients précédents en proposant un réseau en anneau, destiné à la transmission d'informations multiplexées en longueur d'onde et ayant une plus grande capacité que les anneaux connus à technologie électronique tout en nécessitant moins d'équipements que les anneaux connus à routage spectral.

L'invention utilise de préférence la norme de transmission HNS et, dans ces conditions, on est capable de la mettre en oeuvre avec des équipements standards relatifs à cette norme, en ayant recours au multiplexage en longueur d'onde, d'où l'augmentation de la capacité de transmission.

De plus, dans un mode de réalisation préféré de l'invention, on met en oeuvre la Protection de Section de Multiplexage, ce qui permet de conserver une protection totale contre toute panne simple d'un noeud de l'anneau ou d'une artère de celui-ci.

L'invention présente les avantages
- de permettre une organisation logique de l'anneau qui soit indépendante de l'ordre des noeuds donné par la topologie physique du réseau et
- d'être compatible avec une gestion de l'anneau au moyen de la norme de transmission HNS.

De façon précise, la présente invention a pour objet un réseau en anneau, destiné à la transmission d'informations sous forme optique, multiplexées en longueur d'onde, ce réseau comprenant des noeuds optiquement reliés les uns aux autres et étant caractérisé en ce qu'il comprend en outre :
- une première fibre optique formant un anneau qui passe successivement par les noeuds du réseau et étant destinée à être parcourue dans un premier sens par les informations,
- une deuxième fibre optique formant un anneau qui passe successivement par les noeuds du réseau et étant destinée à être parcourue dans un deuxième sens opposé au premier sens par les informations,
- des multiplexeurs à insertion-extraction électroniques, appelés MIE, respectivement placés dans les noeuds du réseau, chaque MIE étant apte à envoyer des informations vers d'autres MIE du réseau, respectivement à des longueurs d'onde déterminées, chaque MIE comprenant :
   - une première interface-agrégat d'émission d'informations à insérer dans la première fibre, en direction d'un MIE associé, et de réception d'informations extraites de la deuxième fibre et provenant de ce MIE associé, et
   - une deuxième interface-agrégat d'émission d'informations à insérer dans la deuxième fibre, en direction d'un autre MIE associé, et de réception d'informations extraites de la première fibre et provenant de cet autre MIE associé,
- des multiplexeurs à insertion-extraction optiques, appelés MIEO, respectivement associés aux MIE, chaque MIEO étant apte à insérer dans les première et deuxième fibres les informations provenant du MIE associé et à extraire de ces fibres les informations destinées à ce MIE associé, et
- des moyens de gestion du réseau, une configuration du réseau définissant une liaison bidirectionnelle entre une interface de chaque MIE et une interface du MIE associé, une longueur d'onde d'émission étant affectée à chaque interface.

Selon un mode de réalisation préféré de la présente invention, le réseau est adapté à la norme HNS.

De préférence également, dans chaque MIE,
- la première interface-agrégat est en outre apte
   - à émettre les informations en direction du MIE associé par l'intermédiaire de la deuxième fibre et
   - à recevoir les informations provenant de ce MIE associé par l'intermédiaire de la première fibre, et
- la deuxième interface-agrégat est en outre apte
   - à émettre les informations en direction de l'autre MIE associé par l'intermédiaire de la première fibre et
   - à recevoir les informations provenant de cet autre MIE associé par l'intermédiaire de la deuxième fibre,
chaque liaison bidirectionnelle entre deux noeuds étant auto-sécurisée par Protection de Section de Multiplexage 1+1.

Dans ce cas, pour simplifier la mise en oeuvre de l'invention, il est préférable que, pour chaque MIE, les émissions des informations à destination d'un MIE associé par l'intermédiaire de la première fibre et de la deuxième fibre aient lieu à la même longueur d'onde.

Selon un premier mode de réalisation particulier de l'invention, pour chaque MIE, l'émission d'informations à destination d'un MIE associé et l'émission d'informations depuis ce MIE associé à destination dudit MIE ont lieu à la même longueur d'onde.

Selon un deuxième mode de réalisation particulier, pour chaque MIE, l'émission d'informations à destination d'un MIE associé et l'émission d'informations depuis ce MIE associé à destination dudit MIE ont lieu à des longueurs d'onde différentes.

Dans une réalisation particulière de l'invention, l'un au moins des MIE permet en outre de relayer des informations provenant d'un autre MIE et destinées à un MIE associé à cet autre MIE.

Dans ce cas, afin de se protéger vis-à-vis d'une panne du MIE qui relaye les informations, celles-ci sont également émises par ledit autre MIE à la fois par la première interface-agrégat et la deuxième interface-agrégat de cet autre MIE.

On utilise alors la protection de conduit connue dans la norme HNS.

Dans le réseau objet de l'invention, au moins l'une des liaisons peut être établie entre deux noeuds physiquement non adjacents du réseau :

La " répartition logique " des noeuds, c'est-à-dire l'affectation des longueurs d'onde, est indépendante de l'implantation physique des noeuds et peut donc être différente de cette implantation physique.

On a donc toute liberté pour associer logiquement les MIE afin d'optimiser la configuration du réseau et notamment de réduire le trafic qui est relayé par les noeuds.

Les MIEO peuvent comprendre des dispositifs optiques (filtres, réseaux de diffraction par exemple) permettant d'insérer et d'extraire des longueurs d'onde fixes ou, au contraire, d'autres dispositifs optiques accordables pour insérer et extraire des longueurs d'onde que l'on peut ainsi sélectionner.

### BRÈVE DESCRIPTION DES DESSINS

La présente invention sera mieux comprise à la lecture d'exemples de réalisation donnés ci-après, à titre purement indicatif et nullement limitatif, en faisant référence aux dessins annexés sur lesquels :
- la figure 1 est une vue schématique d'un mode de réalisation particulier du réseau en anneau objet de l'invention,
- la figure 2 est une vue schématique de l'un des noeuds du réseau représenté sur la figure 1,
- la figure 3 illustre schématiquement le circuit normal et le circuit de secours qui sont utilisés dans ce réseau de la figure 1,
- la figure 4 est une vue schématique d'un autre mode de réalisation particulier de l'invention,
- la figure 5 représente une matrice de trafic utilisable avec ce réseau, et
- la figure 6 illustre l'avantage de l'invention pour la mise en oeuvre de cette matrice de trafic, par rapport à un réseau connu utilisant la technologie électronique.

### EXPOSÉ DÉTAILLÉ DE MODES DE RÉALISATION PARTICULIERS

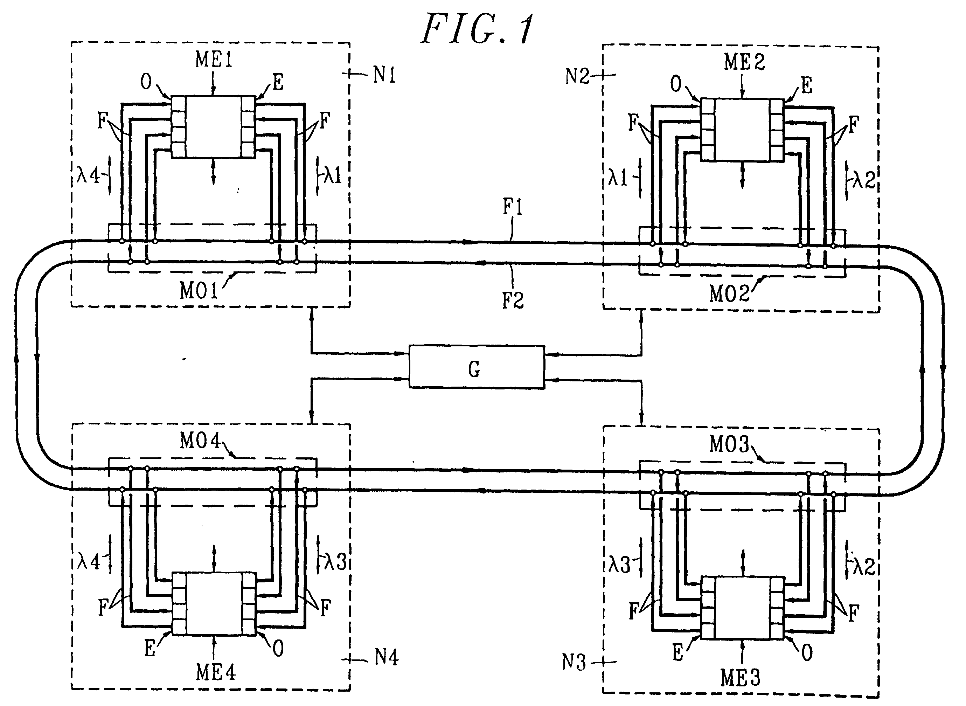

Le réseau en anneau conforme à la présente invention, qui est schématiquement représenté sur la figure 1, est destiné à la transmission d'informations sous forme optique, multiplexées en longueur d'onde.

Ce réseau comprend plusieurs noeuds, ou stations, au nombre de quatre dans l'exemple représenté sur la figure 1.

Ces noeuds portent respectivement les références N1, N2, N3 et N4 et sont disposés dans cet ordre le long du réseau, le noeud N4 étant adjacent au noeud N1.

Ce réseau comprend également une première fibre optique F1 et une deuxième fibre optique F2 formant chacune un anneau qui passe successivement par les noeuds Ni du réseau (l'indice i allant de 1 à 4).

La fibre F1 est destinée à être parcourue dans un premier sens par des informations tandis que la deuxième fibre F2 est destinée à être parcourue par des informations dans un deuxième sens opposé au premier.

Chaque noeud Ni comprend un multiplexeur à insertion-extraction électronique, ou MIE, qui porte la référence MEi (l'indice i allant de 1 à 4).

De façon connue, les MIE sont reliés à d'autres équipements électroniques, ce que l'on a symbolisé par des doubles flèches.

On définit des liaisons bidirectionnelles, appelées " section colorées ", entre chaque noeud du réseau et d'autres noeuds de ce réseau.

Chaque noeud est relié, au maximum, à deux autres noeuds car, comme on le verra plus loin, chaque MIE ne comprend que deux interfaces-agrégats.

Dans l'exemple représenté sur la figure 1, on définit quatre liaisons bidirectionnelles :
- une liaison entre les noeuds N1 et N2,
- une liaison entre les noeuds N2 et N3,
- une liaison entre les noeuds N3 et N4 et
- une liaison entre les noeuds N4 et N1.

Conformément à la présente invention, une longueur d'onde est affectée à la liaison d'un noeud vers un autre noeud du réseau.

Dans l'exemple représenté, cette longueur d'onde est également affectée à la liaison inverse.

C'est ainsi que des longueurs d'onde λ1, λ2, λ3 et λ4 sont respectivement affectées aux liaisons bidirectionnelles entre les noeuds N1 et N2, entre les noeuds N2 et N3, entre les noeuds N3 et N4 et entre les noeuds N4 et N1.

Le réseau comprend aussi des moyens de gestion G destinés à commander chacun des noeuds N1 à N4 et plus précisément les équipements électroniques contenus dans ces noeuds.

Dans chacun des noeuds N1 à N4, le MIE comprend :
- une première interface-agrégat appelée " interface Est ", référencée E et destinée
   - à émettre des informations que l'on veut insérer dans la fibre F1 en direction d'un MIE associé et également
   - à recevoir des informations extraites de la fibre F2 et provenant de ce MIE associé, et
- une deuxième interface-agrégat appelée " interface Ouest ", référencée O et destinée
   - à émettre des informations que l'on veut insérer dans la fibre F2 en direction d'un autre MIE associé et également
   - à recevoir des informations extraites de la fibre F1 et provenant de cet autre MIE associé.

Dans l'exemple représenté, le MIE référencé MEi, l'indice i allant de 1 à 3, envoie des informations au MIE référencé MEi+1 et réciproquement.

Plus précisément, l'interface Est E du MIE référencé MEi émet des informations à la longueur d'onde λi, à destination de l'interface Ouest O du MIE référencé MEi+1 et réciproquement.

Le MIE référencé ME4 émet, quant à lui, des informations à la longueur d'onde λ4, à destination du MIE référencé ME1 et réciproquement.

Ainsi, l'interface Est E du MIE référencé ME4 émet des informations à la longueur d'onde λ4, à destination de l'interface Ouest O du MIE référence ME1 et réciproquement.

En plus des équipements dont il a été question plus haut, chaque noeud Ni du réseau (l'indice i allant de 1 à 4) comprend un multiplexeur à insertion-extraction optique, ou MIEO, qui porte la référence MOi.

Ce MIEO constitue une interface entre le MIE associé et les fibres optiques F1 et F2.

Chaque MIEO est relié par l'intermédiaire de fibres optiques F aux interfaces Est et Ouest du MIE associé.

Chaque MIEO est apte
- à insérer dans les fibres F1 et F2 les informations provenant du MIE qui lui est associé et
- à extraire de ces fibres les informations qui circulent dans celles-ci et qui sont destinées à ce MIE associé, comme on le verra plus en détail par la suite.

Le réseau conforme à l'invention, qui est schématiquement représenté sur la figure 1, est adapté à la norme de transmission à Hiérarchie Numérique Synchrone ou norme HNS.

On notera que, dans le réseau de la figure 1, les MIEO sont reliés les uns aux autres par la paire de fibres optiques F1 et F2, d'où une continuité optique du réseau, alors qu'un réseau connu utilisant la technologie électronique ne présente pas une telle continuité optique.

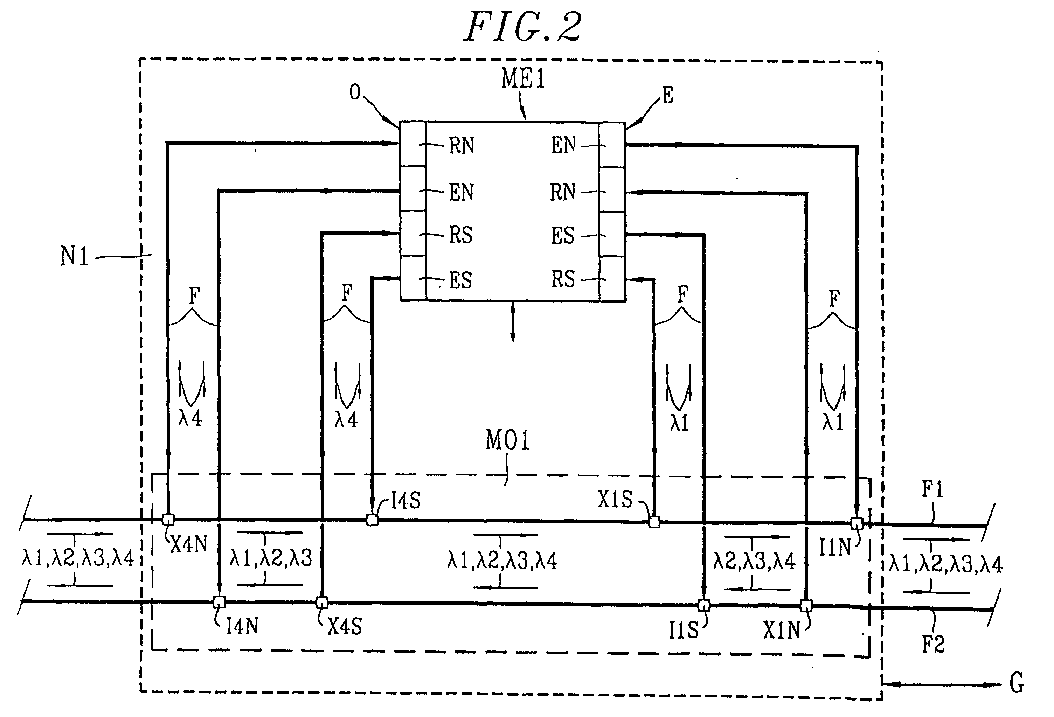

La figure 2 représente, de façon plus détaillée que la figure 1, un noeud du réseau de cette figure 1.

Dans l'exemple de la figure 2, il s'agit du noeud N1, mais à partir de cette description de la figure 2, l'homme du métier en déduira la constitution des autres noeuds N2 à N4 du réseau.

L'interface Est E du MIE référencé ME1 sur la figure 2 comprend un émetteur EN des informations sous forme optique, à la longueur d'onde λ1, destinées au noeud N2.

Le MIEO associé, référencé MO1, comprend un moyen d'insertion I1N (multiplexeur) relié à l'émetteur EN par l'une des fibres F et destiné à insérer ces informations dans la fibre F1.

L'interface Est E comprend aussi un récepteur RN des informations sous forme optique, à la longueur d'onde λ1, en provenance du noeud N2 et destinées au noeud N1.

Le MIEO de la figure 2 comprend aussi un moyen d'extraction X1N (filtre) de ces informations qui se propagent dans la fibre F2 pour les envoyer, par l'intermédiaire de l'une des fibres F, au récepteur RN.

L'interface Ouest O du MIE de la figure 2 comprend un émetteur EN d'informations sous forme optique, à la longueur d'onde λ4, destinées au noeud N4.

Le MIEO de la figure 2 comprend aussi un autre moyen d'insertion I4N (multiplexeur) relié à l'émetteur EN de cette interface Ouest O par l'une des fibres F et destiné à insérer ces informations dans la fibre F2.

L'interface Ouest O comprend aussi un autre récepteur RN des informations sous forme optique, à la longueur d'onde λ4, en provenance du noeud N4 et destinées au noeud N1.

Le MIEO de la figure 2 comprend aussi un moyen d'extraction X4N (filtre) relié par l'une des fibres F à cet autre récepteur RN et permettant d'extraire de la fibre F1 ces informations provenant du noeud N4.

Dans l'exemple des figures 1 et 2, on utilise la même longueur d'onde pour transmettre des informations d'un noeud vers un autre et réciproquement.

Par exemple, on utilise la longueur d'onde λ1 pour envoyer des informations de l'interface Est E du noeud N1 vers l'interface Ouest O du noeud N2 et réciproquement.

Ceci permet d'utiliser des émetteurs EN (lasers) de mêmes caractéristiques pour l'interface Est E du noeud N1 et pour l'interface Ouest O du noeud N2 et des dispositifs optiques de mêmes caractéristiques dans les MIEO respectivement associés à ces noeuds N1 et N2 pour extraire la longueur d'onde λ1.

Dans un exemple non représenté, on utilise une longueur d'onde donnée pour la transmission d'informations d'un noeud vers un autre noeud et une longueur d'onde différente pour la transmission inverse.

En revenant au réseau de la figure 1, le trafic direct est protégé contre une panne d'artère, de carte d'émission et de noeud traversé.

Par " trafic direct ", on entend les informations issues d'un noeud et destinées à un noeud qui lui est associé.

On rappelle que, dans le cas de la norme HNS, la protection de section de multiplexage, ou PSM, est prévue pour une protection totale d'une liaison point à point en utilisant une redondance des interfaces émission et réception et une redondance du support de transmission.

Pour le réseau en anneau de la figure 1 qui utilise deux fibres optiques formant chacune un anneau, les MIE sont conçus et coopèrent avec les fibres F1 et F2 de manière à pouvoir utiliser la PSM 1+1 (" MSP 1+1 ") dans les publications en langue anglaise) pour protéger chaque section optique de ligne, c'est-à-dire chaque liaison logique directe entre deux MIE (qui peut traverser un ou une pluralité de MIEO), contre une coupure de fibre optique ou une panne de MIEO traversé.

On se réfère à nouveau à la figure 2 pour expliquer la conception du MIE référencé ME1 en vue de mettre en oeuvre cette protection.

L'homme du métier est capable d'en déduire la conception des autres MIE du réseau.

On voit sur la figure 2 que l'interface Est E de ce MIE comprend, en plus de l'émetteur EN ou " émetteur normal " un autre émetteur ES ou " émetteur de secours ".

Ce dernier émet également les informations sous forme optique, à la longueur d'onde λ1, destinées au noeud N2 en même temps que ces informations sont émises par l'émetteur EN.

Le MIEO associé à ce MIE comprend un moyen d'insertion I1S (multiplexeur) qui est relié par l'intermédiaire de l'une des fibres optiques F à l'émetteur ES et qui est destiné à insérer dans la fibre F2 ces informations à la longueur d'onde λ1.

On voit que l'interface Est E comprend aussi, en plus du récepteur RN ou récepteur normal, un autre récepteur RS, ou récepteur de secours, destiné à recevoir les informations sous forme optique, de longueur d'onde λ1, en provenance du noeud N2 et destinées au noeud N1.

Le MIEO de la figure 2 comprend aussi un autre moyen d'extraction X1S (filtre) destiné à extraire de la fibre F1 ces informations en provenance du noeud N2 pour les envoyer par l'intermédiaire de l'une des fibres F, à ce récepteur RS.

En plus de son émetteur EN ou émetteur normal, l'interface Ouest O du MIE référencé ME1 comprend un autre émetteur ES, ou émetteur de secours, prévu pour émettre les informations sous forme optique, à la longueur d'onde λ4, destinées au noeud N4 en même temps que ces informations sont émises par l'émetteur EN de l'interface Ouest O.

Le MEIO associé comprend aussi un autre moyen d'insertion I4S (multiplexeur) relié par l'une des fibres optiques F à cet émetteur ES et destiné à insérer ces informations dans la fibre F1.

L'interface Ouest O comprend, en plus de son récepteur RN, un autre récepteur RS, ou récepteur de secours, prévu pour recevoir les informations sous forme optique, à la longueur d'onde λ4, en provenance du noeud N4.

Le MIEO associé comprend aussi un autre moyen d'extraction X4S (filtre) relié à cet autre récepteur RS par l'une des fibres F et destiné à extraire de la fibre F2 ces informations, à la longueur d'onde λ4, provenant du noeud N4.

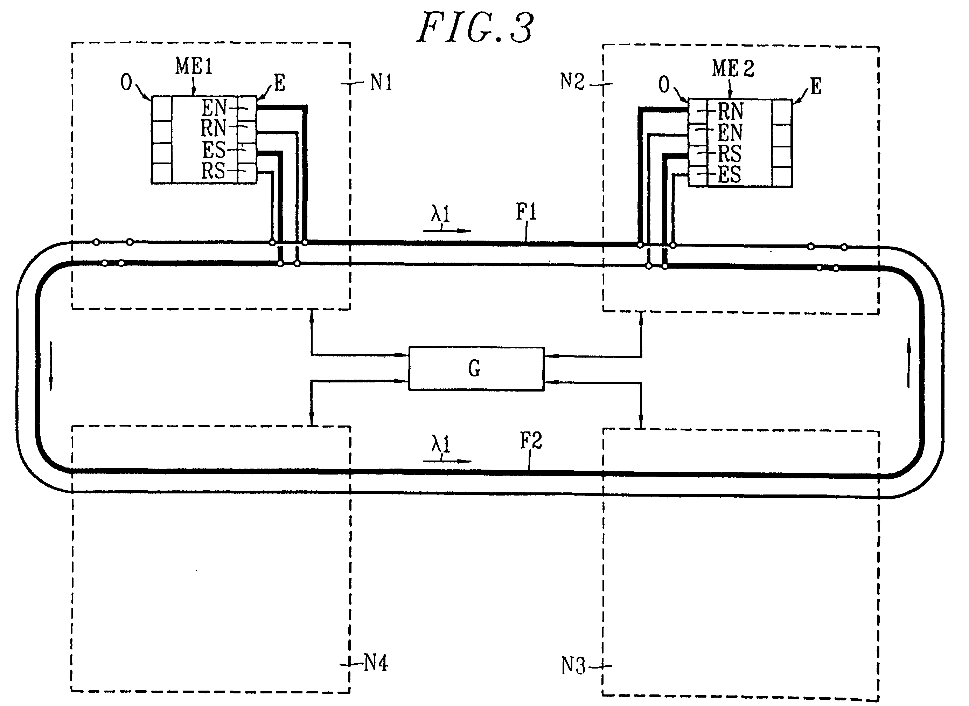

Cette protection de trafic direct sera mieux comprise en se reportant à la figure 3 qui illustre schématiquement la protection du trafic direct du noeud N1 vers le noeud N2.

L'adjonction des émetteurs et des récepteurs de secours dans les MIE fait qu'il existe non seulement un circuit normal, mais encore un circuit de secours pour chaque trafic direct.

On voit sur la figure 3 le circuit normal des informations émises par le noeud N1 à destination du noeud N2.

Ce circuit normal va de l'émetteur EN de l'interface Est E du MIE du noeud N1 jusqu'au récepteur RN de l'interface Ouest O du MIE du noeud N2 par l'intermédiaire de la fibre F1.

On voit également le circuit de secours de ces informations émises par le noeud N1 à destination du noeud N2.

Ce circuit de secours va de l'émetteur ES de l'interface Est E du MIE du noeud N1 jusqu'au récepteur RS de l'interface ouest O du MIE du noeud N2 par l'intermédiaire de la fibre F2.

Pour la clarté de la figure 3, on a seulement représenté en traits épais le circuit normal et le circuit de secours pour ce trafic allant du noeud N1 au noeud N2 à la longueur d'onde λ1.

On précise que, en ce qui concerne le trafic allant du noeud N2 au noeud N1 (à la longueur d'onde λ1), le circuit normal va de l'émetteur normal de l'interface Ouest O du MIE du noeud N2 jusqu'au récepteur normal RN de l'interface Est E du MIE du noeud N1 en passant par la fibre optique F2.

Le circuit de secours relatif à ce trafic direct du noeud N2 vers le noeud N1 à la longueur d'onde λ1 va, quant à lui, de l'émetteur de secours ES de l'interface Ouest du noeud N2 au récepteur de secours RS de l'interface Est du noeud N1 en passant par la fibre F2.

De la description qui précède et qui est relative au circuit normal et au circuit de secours du trafic direct entre les noeuds N1 et N2, l'homme du métier déduira aisément le circuit normal et le circuit de secours de chacun des autres trafics directs du réseau de la figure 1.

L'utilisation d'un circuit normal et d'un circuit de secours permet de mettre en oeuvre la PSM 1+1 pour protéger une section optique de ligne.

Les moyens de gestion G sont adaptés à cette PSM 1+1.

Les émetteurs et les récepteurs de l'interface Est E du MIE du noeud N1 et les émetteurs et les récepteurs de l'interface Ouest O du MIE du noeud N2 sont " munis " d'une PSM ligne 1+1.

Il en est de même pour chaque interface de chaque MIE du réseau, ce qui protège les sections optiques de ligne contre une panne d'artère, de carte d'émission et de noeud traversé.

Dans l'exemple décrit, la longueur d'onde relative à un circuit normal et la longueur d'onde relative au circuit de secours correspondant sont identiques.

Cependant, on pourrait utiliser des longueurs d'onde différentes l'une de l'autre pour ce circuit normal et ce circuit de secours sans perturber le fonctionnement de la protection.

Dans un réseau conforme à la présente invention, les liaisons entre les noeuds de ce réseau n'ont pas nécessairement de rapport avec la structure physique de l'anneau optique du réseau.

L'utilisation des différentes longueurs d'onde, à raison d'une longueur d'onde par liaison logique entre deux noeuds, permet une grande flexibilité dans la configuration du réseau en vue de l'optimisation de celui-ci.

Il est en effet possible d'adapter les sections optiques de ligne aux trafics les plus importants en volume dans l'anneau.

On rappelle qu'une section optique de ligne est une liaison logique directe entre deux noeuds du réseau qui peuvent être adjacents ou, au contraire, non adjacents dans ce réseau.

Cet avantage est schématiquement illustré par la figure 4 où, contrairement au cas de la figure 1, les liaisons logiques ne sont pas établies entre des noeuds adjacents du réseau.

Dans l'exemple de la figure 4, on suppose que le trafic est important entre les noeuds N1 et N3, entre les noeuds N3 et N2, entre les noeuds N2 et N4 et entre les noeuds N4 et N1.

Une première liaison logique à la longueur d'onde λ1 est alors établie entre le noeud N1 (interface Est du MIE correspondant) et le noeud N3 (interface Ouest du MIE correspondant).

Une deuxième liaison logique est établie à la longueur d'onde λ2 entre le noeud N3 (interface Est du MIE correspondant) et le noeud N2 (interface Ouest du MIE correspondant).

Une troisième liaison logique à la longueur d'onde λ3 est établie entre le noeud N2 (interface Est du MIE correspondant) et le noeud N4 (interface Ouest du MIE correspondant).

Une quatrième liaison logique à la longueur d'onde λ4 est établie entre le noeud N4 (interface Est du MIE correspondant) et le noeud N1 (interface Ouest du MIE correspondant).

Bien entendu, il convient alors de modifier les MIEO du réseau (par rapport au cas de la figure 1) pour qu'ils soient adaptés à cette nouvelle configuration.

De plus, dans la présente invention, puisqu'un MIE peut être relié au plus à deux autres MIE, il n'est pas toujours possible d'avoir une section optique de ligne pour chacun des trafics entre les noeuds.

Ceci se produit par exemple dans le cas où un noeud donné doit communiquer avec plus de deux autres noeuds.

De la même manière que dans un anneau HNS classique de type électronique, on utilise alors un brassage des conduits qui transitent par un MIE.

On rappelle que chaque MIE comprend une matrice de brassage électronique.

A titre d'exemple, en revenant à la figure 1, dans laquelle il n'existe pas de section optique de ligne entre les noeuds N1 et N3, un trafic entre le noeud N1 et le noeud N3 est alors relayé par le noeud N2 puisque les sections optiques de ligne entre les noeuds N1 et N2 et entre les noeuds N2 et N3 existent.

Dans ce cas, toute information émise par le noeud N1 à destination du noeud N3 va d'abord du noeud N1 au noeud N2 à la longueur d'onde λ1, puis est brassée de façon appropriée dans le MIE de ce noeud N2 pour être ensuite réémise à la longueur d'onde λ2 en direction du noeud N3.

La protection du réseau de la figure 1 est également adaptée au trafic relayé par les noeuds du réseau.

En d'autres termes, le trafic qui est relayé par un noeud intermédiaire est également protégé contre une panne de ce noeud.

La PSM mentionnée plus haut protège uniquement une section optique de ligne.

Pour la protection du trafic relayé, on utilise également un mécanisme de la HNS qui est appelé " protection de conduit ".

Le trafic transporté par un conduit est, selon ce mécanisme, émis simultanément par l'interface Est et l'interface Ouest du MIE qui est à l'origine du trafic.

Ce dernier est ainsi dupliqué et brassé par des noeuds distincts.

Par exemple, dans le cas où le noeud N2 relaye le trafic issu du noeud N1 à destination du noeud N3, les informations émises par le noeud N1 à destination du noeud N3 le sont par l'interface Est E du MIE du noeud N1 et également par l'interface Ouest O de ce MIE.

Les MIEO du réseau de la figure 1 ont une structure adaptée à une protection en cas de panne d'un élément constitutif de ces MIEO.

En effet, en prenant comme exemple le MIEO de la figure 2, ce MIEO comprend, en association avec l'interface Est du MIE correspondant :
- deux multiplexeurs pour l'insertion des informations à la longueur d'onde λ1 (circuit normal et circuit de secours) et
- deux filtres pour l'extraction des informations à cette longueur d'onde λ1 (circuit normal et circuit de secours).

Ce MIEO comprend aussi deux autres filtres et deux autres multiplexeurs qui sont associés à l'interface Ouest du MIE correspondant (qui travaille à la longueur d'onde λ4 dans l'exemple de la figure 2).

Le MIEO de chaque noeud comprend ainsi quatre multiplexeurs d'insertion et quatre filtres d'extraction.

Avec une telle structure de MIEO, la PSM protège le réseau vis-à-vis de la rupture de l'un quelconque des éléments constitutifs de ce MIEO.

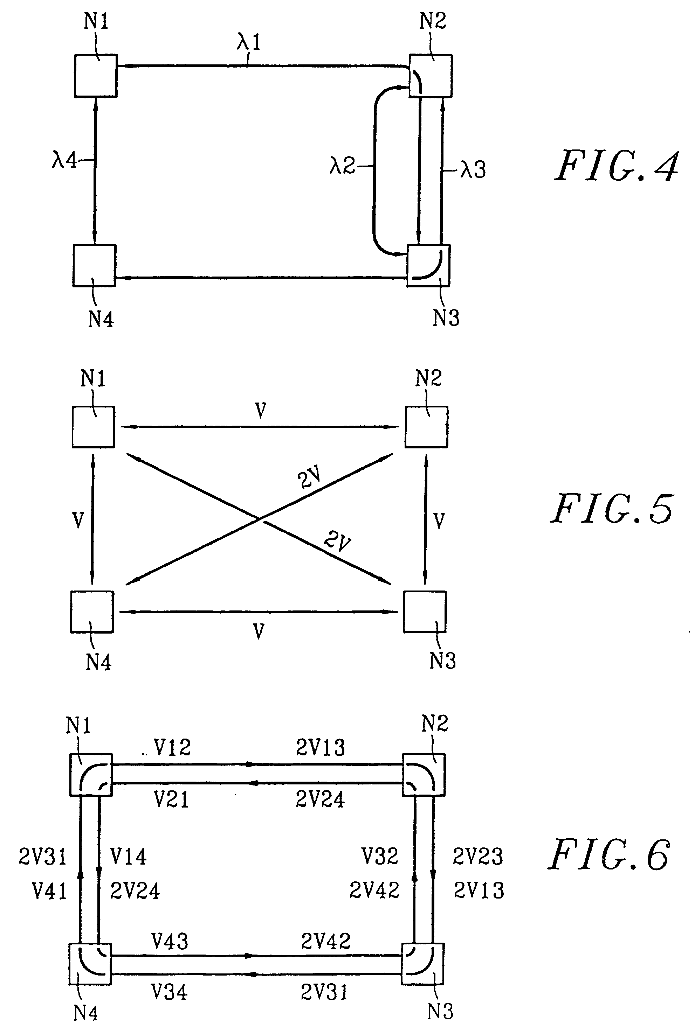

On explique ci-après, en faisant référence aux figures 5 et 6, l'intérêt de la présente invention en ce qui concerne la capacité utile de trafic pour les MIE.

La figure 5 est un exemple de matrice de trafic entre les quatre noeuds N1 à N4 d'un réseau en anneau.

On a noté sur cette figure 5 les conteneurs virtuels V (qui sont de type VC4 dans cet exemple) qui doivent être échangés entre les noeuds du réseau.

Par exemple, un conteneur virtuel est à échanger entre les noeuds N1 et N2 et deux conteneurs virtuels sont à échanger entre les noeuds N2 et N4.

Un réseau en anneau classique de type électronique, à protection totale de conduit, nécessite l'installation, dans cet exemple, de sept MIE STM-4 sur deux anneaux optiques passant par ces quatre noeuds.

La figure 6 illustre un réseau conforme à l'invention, à quatre noeuds N1 à N4, du genre de celui de la figure 1.

Ce réseau conforme à l'invention nécessite seulement, comme on l'a vu, quatre MIE (à raison de un MIE par noeud) pour mettre en oeuvre cette matrice de trafic.

Les échanges de conteneurs virtuels correspondants sont indiqués sur la figure 6 dans laquelle
- le symbole Vij, où i et j prennent les valeurs 1 à 4, représente l'envoi d'un conteneur virtuel du noeud Ni au noeud Nj et
- le symbole 2Vij représente, quant à lui, l'envoi de deux conteneurs virtuels du noeud Ni au noeud Nj.

Par exemple, on voit sur la figure 6 que le noeud N1 envoie un conteneur virtuel (V12) au noeud N2 et réciproquement.

On voit aussi que le noeud N2 envoie deux conteneurs virtuels (2V24) au noeud N4 et réciproquement.

La figure 6 ne montre que les circuits normaux relatifs à la matrice de trafic considérée.

Cette matrice de trafic peut ainsi être résolue, conformément à la présente invention, avec quatre MIE de type STM-4 dont les cartes d'interface de ligne sont équipées de l'option sécurisation de section PSM, avec deux longueurs d'onde assignées en fonction du choix retenu pour l'architecture du réseau.

Il est à remarquer que les MIE fonctionnent dans les mêmes conditions que dans une architecture standard.

Les signaux qui arrivent à l'une des interfaces d'un tel MIE sont traités à l'intérieur de ce MIE pour être dérivés en tant qu'affluents (" *tributaries* " dans les publications en langue anglaise) ou pour être envoyés directement sur l'autre interface.

Dans l'exemple des figures 1 et 3, chaque MIEO met en oeuvre des filtrages fixes et des extractions totales de longueur d'onde.

On peut également réaliser un réseau en anneau conforme à la présente invention en utilisant des MIEO dont le filtrage est accordable en longueur d'onde.

Les moyens de gestion G sont alors prévus pour commander les filtres accordables en longueur d'onde.

On obtient ainsi un réseau qui est réalisé avec des équipements électroniques standards mais dont l'architecture est optiquement reconfigurable.

On est alors capable de modifier en fonction du trafic, les liaisons entre noeuds.

Par exemple, à partir d'une architecture dans laquelle une liaison est établie entre les noeuds N1 et N2 à la longueur d'onde λ1, on est capable de passer à une architecture où une liaison est établie entre les noeuds N1 et N3 à cette longueur d'onde.

Les exemples ci-dessus de la présente invention se réfèrent plus particulièrement à la norme HNS.

Bien entendu, l'invention est applicable à la norme américaine SONET qui est très voisine de la norme HNS.

Les documents cités dans la présente description sont les suivants :
(1) A.F. Elrefaie et al., " Fibre amplifiers in closed ring WDM networks ", Electron. Lett., vol.28, pp 2340-2341, 1992
(2) A. Hamel, D. Laville et al., " Multilayer Add-Drop Multiplexers in a self-healing WDM Ring Network ", OFC'95, p.84 et 85
(3) J.L. Archambault et al., " Novel channel dropping filter by grating frustrated coupling in single mode optical fiber ", OFC'94, TuL5
(4) J.E. Baran, D.A. Smith, A. D'Alessandro, " Multiwavelength performance of an apodized acousto-optic switch ", OFC'94, pp 57-58
(5) A.F. Elrefaie, " Multiwavelength survivable ring network architectures ", I.C.C. 93, pp 1245-1251
(6) M.J. Chawki, V. Tholey et al., " Demonstration of a WDM Survivable open ring network using reconfigurable channel dropping receivers ", ECOC 94, pp 897-900.

On connaît aussi les documents suivants :
**WORLD TELECOMMUNICATION CONGRESS ISS 95,** vol.2, 23-28 Avril 1995 BERLIN, DE, pages 392 à 396
   Ce document décrit l'introduction de techniques multilongueurs d'onde dans les trois couches d'un réseau utilisant la norme de transmission "Hiérarchie Numérique Synchrone" (HNS). Une architecture en anneau unidirectionnel à deux fibres est décrite (voir la figure 4).
**ICC 92, CHICAGO,** 14-18 juin 1992, vol.4, 14 juin 1992 INSTITUTE OF ELECTRICAL AND ELECTRONICS ENGINEERS
   Ce document décrit simplement des réseaux en anneaux multilongueurs d'onde, à deux fibres optiques (voir la figure 1) ou à quatre fibres optiques (voir la figure 4).

## Revendications

1. Réseau en anneau, destiné à la transmission d'informations sous forme optique, multiplexées en longueur d'onde, ce réseau comprenant des noeuds (N1, N2, N3, N4) optiquement reliés les uns aux autres et comprenant en outre :
- une première fibre optique (F1) formant un anneau qui passe successivement par les noeuds du réseau et étant destinée à être parcourue dans un premier sens par les informations,
- une deuxième fibre optique (F2) formant un anneau qui passe successivement par les noeuds du réseau et étant destinée à être parcourue dans un deuxième sens opposé au premier sens par les informations, le réseau en anneau étant **caractérisé en ce qu'**il comprend
- des multiplexeurs à insertion-extraction électroniques (ME1, ME2, ME3, ME4), appelés MIE, respectivement placés dans les noeuds du réseau, chaque MIE étant apte à envoyer des informations vers d'autres MIE du réseau, respectivement à des longueurs d'onde déterminées, chaque MIE comprenant :
• une première interface-agrégat (E) d'émission d'informations à insérer dans la première fibre (F1), en direction d'un MIE associé, et de réception d'informations extraites de la deuxième fibre (F2) et provenant de ce MIE associé, et
• une deuxième interface-agrégat (O) d'émission d'informations à insérer dans la deuxième fibre (F2), en direction d'un autre MIE associé, et de réception d'informations extraites de la première fibre (F1) et provenant de cet autre MIE associé,
- des multiplexeurs à insertion-extraction optiques (MO1, M02, M03, M04), appelés MIEO, respectivement associés aux MIE, chaque MIEO étant apte à insérer dans les première et deuxième fibres les informations provenant du MIE associé et à extraire de ces fibres les informations destinées à ce MIE associé, et
- des moyens (G) de gestion du réseau, une configuration du réseau définissant une liaison bidirectionnelle entre une interface de chaque MIE et une interface du MIE associé, une longueur d'onde d'émission étant affectée à chaque interface.

2. Réseau selon la revendication 1, **caractérisé en ce qu'**il est adapté à la norme de transmission Hiérarchie Numérique Synchrone.

3. Réseau selon la revendication 2, **caractérisé en ce que**, dans chaque MIE,
- la première interface-agrégat (E) est en outre apte
• à émettre les informations en direction du MIE associé par l'intermédiaire de la deuxième fibre (F2) et
• à recevoir les informations provenant de ce MIE associé par l'intermédiaire de la première fibre (F1), et
- la deuxième interface-agrégat (O) est en outre apte
• à émettre les informations en direction de l'autre MIE associé par l'intermédiaire de la première fibre (F1) et
• à recevoir les informations provenant de cet autre MIE associé par l'intermédiaire de la deuxième fibre (F2),
chaque liaison bidirectionnelle entre deux noeuds étant auto-sécurisée par Protection de Section de Multiplexage 1+1.

4. Réseau selon la revendication 3, **caractérisé en ce que**, pour chaque MIE (ME1, ME2, ME3, ME4), les émissions des informations à destination d'un MIE associé par l'intermédiaire de la première fibre (F1) et de la deuxième fibre (F2) ont lieu à la même longueur d'onde.

5. Réseau selon l'une quelconque des revendications 1 à 4, **caractérisé en ce que**, pour chaque MIE (ME1, ME2, ME3, ME4), l'émission d'informations à destination d'un MIE associé et l'émission d'informations depuis ce MIE associé à destination dudit MIE ont lieu à la même longueur d'onde.

6. Réseau selon l'une quelconque des revendications 1 à 4, **caractérisé en ce que**, pour chaque MIE (ME1, ME2, ME3, ME4), l'émission d'informations à destination d'un MIE associé et l'émission d'informations depuis ce MIE associé à destination dudit MIE ont lieu à des longueurs d'onde différentes.

7. Réseau selon l'une quelconque des revendications 1 à 6, **caractérisé en ce que** l'un au moins des MIE (ME1, ME2, ME3, ME4) permet en outre de relayer des informations provenant d'un autre MIE et destinées à un MIE associé à cet autre MIE.

8. Réseau selon les revendications 2 et 7, **caractérisé en ce que** les informations sont émises par ledit autre MIE à la fois par la première interface-agrégat (E) et la deuxième interface-agrégat (O) de cet autre MIE.

9. Réseau selon l'une quelconque des revendications 1 à 8, **caractérisé en ce qu'**au moins l'une des liaisons est établie entre deux noeuds physiquement non adjacents du réseau.

10. Réseau selon l'une quelconque des revendications 1 à 9, **caractérisé en ce que** les MIEO (MO1, M02, M03, M04) comprennent des dispositifs optiques permettant d'insérer et d'extraire des longueurs d'onde fixes.

11. Réseau selon l'une quelconque des revendications 1 à 9, **caractérisé en ce que** les MIEO comprennent des dispositifs optiques accordables pour insérer et extraire des longueurs d'onde que l'on peut ainsi sélectionner.

## Claims

1. Ring network intended for the transmission of informations in optical form and which are wavelength multiplexed, said network incorporating optically interconnected nodes (N1, N2, N3, N4) comprising:
- a first optical fibre (F1) forming a ring, which successively passes through the nodes of the network and which is to be traversed by the informations in a first direction,
- a second optical fibre (F2) forming a ring and which passes successively through the nodes of the network and which is traversed by the informations in a second direction opposite to the first direction, the ring network being **characterized in that** it comprises:
- electronic add-drop multiplexers (ME1, ME2, ME3, ME4), known as ADM, each ADM being able to supply informations to other ADM's of the network, respectively at given wavelengths, each ADM incorporating:
- a first aggregate interface (E) for the transmission of informations to be added in the first fibre (F1) in the direction of an associated ADM and the reception of informations dropped from the second fibre (F2) and coming from the said associated ADM, and
- a second aggregate interface (O) for the transmission of informations to be added in the second fibre (F2), in the direction of another associated ADM and for the reception of informations dropped from the first fibre (F1) and coming from said associated other ADM,
- optical add-drop multiplexers (MO1, MO2, MO3, MO4) known as OADM's, respectively associated with the ADM's, each OADM being able to add to the first and second fibres the informations coming from the associated ADM and drop from said fibres the informations intended for said associated ADM and
- means (G) for managing the network, a configuration of the network defining a bidirectional link between an interface of each ADM and an interface of the associated ADM, one transmission wavelength being allocated to each interface.

2. Network according to claim 1, **characterized in that** it is adapted to the synchronous digital hierarchy transmission standard.

3. Network according to claim 2, **characterized in that**, in each ADM, the first aggregate interface (E) is also able
- to transmit informations in the direction of the associated ADM by means of the second fibre (F2) and
- receive the informations coming from said associated ADM by means of the first fibre (F1) and
the second aggregate interface (O) is also able
- to transmit informations in the direction of the other associated ADM by means of the first fibre (F1) and
- receive the informations coming from said other associated ADM by means of the second fibre (F2),
each bidirectional link between two nodes being auto-securized by 1+1 multiplex section protection.

4. Network according to claim 3, **characterized in that**, for each ADM (ME1, ME2, ME3, ME4), the transmissions of informations intended for an associated ADM by means of the first fibre (F1) and the second fibre (F2) take place at the same wavelength.

5. Network according to any one of the claims 1 to 4, **characterized in that**, for each ADM (ME1, ME2, ME3, ME4), the transmission of informations intended for an associated ADM and the transmission informations from said associated ADM intended for said ADM take place at the same wavelength.

6. Network according to any one of the claims 1 to 4, **characterized in that**, for each ADM (ME1, ME2, ME3, ME4), the transmission of informations intended for an associated ADM and the transmission of informations from said associated ADM and intended for said ADM take place at different wavelengths.

7. Network according to any one of the claims 1 to 6, **characterized in that** at least one of the ADM's (ME1, ME2, ME3, ME4) also makes it possible to relay informations coming from another ADM and intended for an ADM associated with said other ADM.

8. Network according to claims 2 and 7, **characterized in that** at least one of the ADM's (ME1, ME2, ME3, ME4) also makes it possible to relay informations coming from another ADM and intended for an ADM associated with said other ADM and **in that** the informations are transmitted by said other ADM both by the first aggregate interface (E) and the second aggregate interface (O) of said other ADM.

9. Network according to any one of the claims 1 to 8, **characterized in that** at least one of the links is established between two physically non-adjacent nodes of the network.

10. Network according to any one of the claims 1 to 9, **characterized in that** the OADM's (MO1, M02, MO3, M04) incorporate optical devices making it possible to add and drop fixed wavelengths.

11. Network according to any one of the claims 1 to 9, **characterized in that** the OADM's incorporate tunable optical devices for adding and dropping wavelengths which can in this way be selected.

## Patentansprüche

1. Ringnetz, das zur Übertragung von Informationen in optischer Form, die in der Wellenlänge gemultiplext sind, bestimmt ist, wobei dieses Netz optisch miteinander verbundene Knoten (N1, N2, N3, N4) umfaßt, und außerdem umfaßt:
- eine erste optische Faser (F1), die einen Ring bildet, der der Reihe nach die Knoten des Netzes passiert und dazu bestimmt ist, in einer ersten Richtung von den Informationen durchlaufen zu werden,
- eine zweite optische Faser (F2), die einen Ring bildet, der der Reihe nach die Knoten des Netzes passiert und dazu bestimmt ist, in einer zweiten, der ersten Richtung entgegensetzten Richtung von den Informationen durchlaufen zu werden,
- wobei das Ringnetz **dadurch gekennzeichnet ist, dass** es umfasst: elektronische Add-Drop-Multiplexer bzw. AbzweigMultiplexer (ME1, ME2, ME3, ME4), sogenannte MIE (Multiplexeurs ä Insertion-Extraction), die jeweils an den Knoten des Netzes plaziert sind, wobei jeder MIE in der Lage ist, Informationen an andere MIE des Netzes jeweils mit bestimmten Wellenlängen zu senden, wobei jeder MIE umfasst:
• ein erstes Schnittstellenaggregat (E) zum Senden von in die erste Faser (F1) einzuspeisenden Informationen in Richtung auf einen zugeordneten MIE und zum Empfang von aus der zweiten Faser (F2) extrahierten und von diesem zugeordneten MIE kommenden Informationen, und
• ein zweites Schnittstellenaggregat (O) zum Senden von in die zweite Faser (F2) in Richtung auf einen weiteren zugeordneten MIE einzuspeisenden Informationen und zum Empfang von aus der ersten Faser (F1) extrahierten und von diesem weiteren zugeordneten MIE kommenden Informationen,
- optische Abzweigmultiplexer (MO1, M02, M03, M04) sogenannte MIEO, die jeweils den MIE zugeordnet sind, wobei jeder MIEO in der Lage ist, in die erste und zweite Faser die von dem zugeordneten MIE kommenden Informationen einzuspeisen und aus diesen Fasern die für diesen zugeordneten MIE bestimmten Informationen zu extrahieren, und
- Mittel (G) zur Steuerung bzw. Verwaltung des Netzes, wobei eine Konfiguration des Netzes eine bidirektionale Verbindung zwischen einer Schnittstelle jedes MIE und einer Schnittstelle des zugeordneten MIE definiert, wobei jeder Schnittstelle eine Wellenlänge zum Senden zugeteilt ist.

2. Netz nach Anspruch 1, **dadurch gekennzeichnet, dass** es an die Norm der Synchronen Digitalen Hierarchie-Übertragung (SDH-Übertragung) angepasst ist.

3. Netz nach Anspruch 2, **dadurch gekennzeichnet, dass** in jedem MIE
- das erste Schnittstellenaggregat (E) außerdem in der Lage ist
• Informationen in Richtung des zugeordneten MIE über die zweite Faser (F2) zu senden, und
• die von diesem zugeordneten MIE kommenden Informationen über die erste Faser (F1) zu empfangen, und
- das zweite Schnittstellenaggregat (O) außerdem in der Lage ist,
• die Informationen in Richtung des zugeordneten anderen MIE über die erste Faser (F1) zu senden, und
• die von diesem anderen zugeordneten MIE kommenden Informationen über die zweite Faser (F2) zu empfangen,
wobei jede bidirektionale Verbindung zwischen zwei Knoten durch einen Multiplex-Sektionsschutz 1+1 automatisch gesichert ist.

4. Netz nach Anspruch 3, **dadurch gekennzeichnet, dass** für jeden MIE (ME1, ME2, ME3, ME4) die Sendevorgänge der Informationen zu einem zugeordneten MIE über die erste Faser (F1) und die zweite Faser (F2) auf der gleichen Wellenlänge stattfinden.

5. Netz nach einem der Ansprüche 1 bis 4, **dadurch gekennzeichnet, dass** für jeden MIE (ME1, ME2, ME3, ME4) das Senden von Informationen zu einem zugeordneten MIE und das Senden von Informationen von diesem zugeordneten MIE zu dem genannten MIE auf der gleichen Wellenlänge stattfindet.

6. Netz nach einem der Ansprüche 1 bis 4, **dadurch gekennzeichnet, dass** für jeden MIE (ME1, ME2, ME3, ME4) das Senden von Informationen zu einem zugeordneten MIE und das Senden von Informationen von diesem zugeordneten MIE zu dem genannten MIE auf verschiedenen Wellenlängen stattfinden.

7. Netz nach einem der Ansprüche 1 bis 6, **dadurch gekennzeichnet, dass** mindestens einer der MIE (ME1, ME2, ME3, ME4) es außerdem ermöglicht, von einem anderen MIE kommende Informationen und für einen diesem anderen MIE zugeordneten MIE bestimmte Informationen weiterzuleiten.

8. Netz nach den Ansprüchen 2 und 7, **dadurch gekennzeichnet, dass** die Informationen von dem anderen MIE gleichzeitig von dem ersten Schnittstellenaggregat (E) und dem zweiten Schnittstellenaggregat (O) dieses anderen MIE gesendet werden.

9. Netz nach einem der Ansprüche 1 bis 8, **dadurch gekennzeichnet, dass** mindestens eine der Verbindungen zwischen zwei physikalisch nicht benachbarten Knoten des Netzes hergestellt wird.

10. Netz nach einem der Ansprüche 1 bis 9, **dadurch gekennzeichnet, dass** die MIEO (MO1, M02, M03, M04) optische Vorrichtungen umfassen, die das Einspeisen und Extrahieren feststehender Wellenlängen ermöglichen.

11. Netz nach einem der Ansprüche 1 bis 9, **dadurch gekennzeichnet, dass** die MIEO optische Vorrichtungen umfassen, die abstimmbar sind, um Wellenlängen, die auf diese Weise ausgewählt werden können, einzuspeisen und zu extrahieren.
